# EUROPEAN PATENT SPECIFICATION

(11) **EP 3 104 045 B1**
(45) Date of publication and mention of the grant of the patent: **05.09.2018**
(21) Application number: 16173743.2
(22) Date of filing: 09.06.2016
(51) Int. Cl.: F16H 57/04

(54) **POWER UNIT AND VEHICLE EQUIPPED WITH THE POWER UNIT**
ANTRIEBSEINHEIT UND FAHRZEUG MIT ANTRIEBSEINHEIT
UNITÉ DE PUISSANCE ET VÉHICULE ÉQUIPÉ DE L'UNITÉ DE PUISSANCE

(30) Priority: 11.06.2015 JP 2015118039
(43) Date of publication of application: 14.12.2016
(73) Proprietor: Yamaha Hatsudoki Kabushiki Kaisha, Iwata-shi, Shizuoka 438-8501 (JP)
(72) Inventor: SAIKA, Tomohiko, Iwata-shi, Shizuoka 438-8501 (JP)
(74) Representative: Grünecker Patent- und Rechtsanwälte PartG mbB

(56) References cited:
- EP-A1- 2 182 245
- JP-A- 2014 206 203

## Description

The present invention relates to a power unit and a vehicle equipped with the power unit.

A power unit equipped with a clutch is conventionally used in vehicles, such as motorcycles, as disclosed in JP 2014-206203 A, for example. The clutch in the power unit disclosed in JP 2014-206203 A has a clutch housing rotating with a crankshaft, first clutch plates rotating with the clutch housing, second clutch plates capable of making contact with and separating from the first clutch plates, and a clutch boss rotating with the second clutch plates. In particular the prior art document JP 2014 206203 A discloses a power unit that comprises a cylinder, a piston reciprocatably provided in the cylinder, a crankshaft connected to the piston via a connecting rod, a rotary shaft including an outer circumferential surface and being allowed to be rotatable by a driving force of the crankshaft, a clutch attached to the rotary shaft, a crank case accommodating the crankshaft, the rotary shaft, and the clutch. A bearing is interposed between the rotary shaft and the crank case. The clutch comprises a first clutch member supported so as to be rotatable relative to the rotary shaft, a first clutch plate rotating with the first clutch member, a second clutch plate capable of making contact with and separating from the first clutch plate, and a second clutch member rotating with the second clutch plate and also rotating with the rotary shaft. The first clutch member includes a bore through which the rotary shaft is inserted and having an inner circumferential surface. Said prior art document discloses the clutch housing that is supported relatively rotationable with regards to the rotary shaft that is embodied as a counter shaft. A sleeve hub is provided to rotate with said counter shaft and a spline is formed for fitting the counter shaft and the sleeve hub to function as a lubrication oil passage. Said spline formed on the counter shaft is connected to an oil passage provided within the counter shaft, wherein an oil groove is arranged at the outer circumference of the counter shaft and close by the intermediate member that is arranged between the counter shaft and the driven gear.

The clutch housing and the clutch boss each have a bore formed therein. A rotary shaft passes through the bore in the clutch housing and the bore in the clutch boss. The clutch boss is secured to the rotary shaft, so that the clutch boss and the rotary shaft rotate together. The clutch housing is rotatably supported on the rotary shaft, and the clutch housing and the rotary shaft are relatively rotatable. When the clutch housing rotates relative to the rotary shaft, frictional resistance arises between the outer circumferential surface of the rotary shaft and the inner circumferential surface of the bore of the clutch housing. In order to reduce the frictional resistance, oil is supplied to the gap between the outer circumferential surface of the rotary shaft and the inner circumferential surface of the bore of the clutch housing. In the power unit described in JP 2014-206203 A, an oil passage is formed inside the rotary shaft. The oil that has passed through the oil passage is supplied to the clearance gap between the outer circumferential surface of the rotary shaft and the inner circumferential surface of the bore of the clutch housing.

However, because the above-described rotary shaft has a large diameter oil passage formed therein, the rotary shaft also inevitably has a large diameter. In addition, in order to supply oil to the oil passage inside the rotary shaft, it is necessary to provide another oil passage in a portion of the power unit other than the rotary shaft, which increases the size of the other portion of the power unit corresponding to the size of the other oil passage. As a consequence, the power unit tends to be larger in size.

The present invention has been accomplished in view of the foregoing and other problems, and it is an object of the invention to provide a power unit that reduces the frictional resistance between the clutch and the rotary shaft while at the same time prevents an increase in the size thereof, and to provide a vehicle equipped therewith.

According to the present invention said object is solved by a power unit having the features of independent claim 1. Preferred embodiments are laid down in the dependent claims.

In the just-described power unit, oil is supplied from the oil reservoir space formed between the inner circumferential surface of the oil catch member and the outer circumferential surface of the rotary shaft to the clearance gap between the outer circumferential surface of the rotary shaft and the inner circumferential surface of the bore of the first clutch member. The oil serves to reduce the frictional resistance between the outer circumferential surface of the rotary shaft and the inner circumferential surface of the bore of the first clutch member. With the just-described power unit, it is not necessary to form a large diameter oil supply passage inside the rotary shaft in order to supply oil to the clearance gap. Therefore, in the case where an oil supply passage needs to be formed inside the rotary shaft, the diameter of the oil supply passage can be made small. Or, no oil supply passage needs to be formed inside the rotary shaft. This enables the rotary shaft to have a smaller diameter. In addition, with the just-described power unit, a large diameter oil passage for supplying oil to the oil supply passage inside the rotary shaft does not need to be provided in the other portion of the power unit. For the reasons described above, the just-described power unit makes it possible to prevent an increase in size of the power unit while reducing the frictional resistance of the clutch.

In a preferable embodiment, the inner circumferential surface of the oil catch member has an angle of 120 degrees or greater about the axial center of the rotary shaft.

When the angle of the inner circumferential surface of the oil catch member is sufficiently great as in the just-described preferred embodiment, the oil reservoir space is ensured to be sufficiently large. Thus, because the oil reservoir space can store a large amount of oil, it is possible to supply the oil steadily to the clearance gap between the outer circumferential surface of the rotary shaft and the inner circumferential surface of the bore of the first clutch member. As a result, the frictional resistance can be reduced steadily.

In another preferred embodiment, a length of the oil reservoir space along the axial direction of the rotary shaft is greater than a thickness of the first clutch plate.

When the oil reservoir space has a sufficient length along the axial direction of the rotary shaft as in the just-described preferred embodiment, the oil reservoir space can store a large amount of oil. This enables a steady supply of oil to the clearance gap between the outer circumferential surface of the rotary shaft and the inner circumferential surface of the bore of the first clutch member, resulting in a steady reduction in the frictional resistance therebetween.

In another preferred embodiment, a maximum depth of the oil reservoir space is greater than a thickness of the first clutch plate.

When the maximum depth of the oil reservoir space is sufficiently deep as in the just-described preferred embodiment, the oil reservoir space can store a large amount of oil. This enables a steady supply of oil to the clearance gap between the outer circumferential surface of the rotary shaft and the inner circumferential surface of the bore of the first clutch member, resulting in a steady reduction in the frictional resistance therebetween.

In another preferred embodiment, the power unit further includes a collar disposed between the bearing and the first clutch member with respect to the axial direction of the rotary shaft and through which the rotary shaft is inserted. At least a portion of the oil catch member is disposed radially outward of the rotary shaft relative to the collar.

In the just-described preferred embodiment, a collar is disposed between the bearing and the first clutch member. It does not mean that a portion of the first clutch member is disposed closer to the bearing relative to an end portion of the oil catch member that faces the first clutch member. Therefore, the dimension of the first clutch member along the axial direction can be kept small, and accordingly, the size of the first clutch member can be reduced. Moreover, because the dimension of the first clutch member along the axial direction can be kept small, the contact area between the outer circumferential surface of the rotary shaft and the inner circumferential surface of the bore of the first clutch member can be reduced. As a result, the frictional resistance can be reduced.

In the just-described preferred embodiment, the oil stored in a bottom portion of the crankcase is scooped up by the crank web in association with the rotation of the crankshaft and is sent through the communication port of the partition wall to a region above the oil catch member. This oil is caught by the oil catch member and is stored in the oil reservoir space. As a result, the oil is stored in the reservoir space steadily. This enables a steady supply of oil to the clearance gap between the outer circumferential surface of the rotary shaft and the inner circumferential surface of the bore of the first clutch member, resulting in a steady reduction in the frictional resistance therebetween.

In another preferred embodiment, the oil catch member is formed integrally with the partition wall.

The just-described embodiment reduces the parts count, thus lowering the manufacturing costs of the power unit.

In another preferred embodiment, the partition wall includes a vertical (first) wall extending in a radial direction of the crankshaft, and a lateral (second) wall extending from an upper (when the power unit is mounted on a vehicle) portion of the vertical wall toward the crank web with respect to an axial direction of the crankshaft. The (vertical) first wall and the (lateral) second wall the partition wall are substantially perpendicular to each other.

In the just-described preferred embodiment, a space for collecting the scattered oil is formed above the lateral wall. The scattered oil runs along the lateral wall and the vertical wall, and is guided into the oil reservoir space. Therefore, the oil can be stored efficiently in the oil reservoir space. This enables a steady supply of oil to the clearance gap between the outer circumferential surface of the rotary shaft and the inner circumferential surface of the bore of the first clutch member, thus resulting in a steady reduction in the frictional resistance therebetween.

In another preferred embodiment, the power unit further includes an oil introducing member including an inner circumferential surface positioned radially outward of the rotary shaft relative to the outer circumferential surface of the rotary shaft, and disposed, when the power unit is mounted on a vehicle, above the oil catch member. The oil introducing member is disposed, with respect to the axial direction of the rotary shaft, at a position closer to the first clutch member relative to an end portion of the bearing that faces the first clutch member, the position also being closer to the bearing relative to an end portion of the first clutch member that faces the bearing, the oil introducing member being spaced apart from the bearing. An opening for introducing oil into the oil reservoir space is formed between the oil introducing member and the oil reservoir space with respect to the axial direction of the rotary shaft.

In the just-mentioned preferred embodiment, the oil introducing member dams up the oil that flows from the bearing toward the first clutch member so as to introduce the oil through the opening into the oil reservoir space. The oil can be stored efficiently in the oil reservoir space. This enables a steady supply of oil to the clearance gap between the outer circumferential surface of the rotary shaft and the inner circumferential surface of the bore of the first clutch member, resulting in a steady reduction in the frictional resistance therebetween.

In another preferred embodiment, the power unit further includes a rib disposed between the bearing and the first clutch member with respect to the axial direction of the rotary shaft and inclined downward toward the oil catch member.

In the just-described preferred embodiment, the oil located above the oil catch member flows along the rib and is guided into the oil catch member. The oil can be stored efficiently in the oil reservoir space. This enables a steady supply of oil to the clearance gap between the outer circumferential surface of the rotary shaft and the inner circumferential surface of the bore of the first clutch member, resulting in a steady reduction in the frictional resistance therebetween.

In another preferred embodiment, the bearing includes a sealing structure for sealing oil.

The just-described preferred embodiment prevents the oil stored in the oil reservoir space from leaking through the bearing. As a result, the oil reservoir space can store the oil stably.

In another preferred embodiment, the outer circumferential surface of the rotary shaft and/or the inner circumferential surface of the bore of the first clutch member is/are provided with a groove.

The just-described preferred embodiment allows the oil to easily flow through the clearance gap between the outer circumferential surface of the rotary shaft and the inner circumferential surface of the bore of the first clutch member. As a result, the oil stored in the oil reservoir space can be supplied to the clearance gap desirably, so that the frictional resistance can be reduced effectively.

In another preferred embodiment, the power unit includes a first gear provided on the crankshaft. The rotary shaft is disposed parallel to the crankshaft. The first clutch member includes a second gear meshing with the first gear. The second clutch member is secured to the rotary shaft. The power unit further includes an output shaft disposed parallel to the rotary shaft, and a transmission coupled to the rotary shaft and the output shaft.

The just-described preferred embodiment makes it possible to obtain the foregoing advantageous effects with the power unit in which the rotary shaft is disposed parallel to the crankshaft.

In another preferred embodiment, the rotary shaft is disposed coaxially with the crankshaft, and is formed integrally with the crankshaft. The power unit further includes another rotary shaft disposed parallel to the rotary shaft and including a first gear. The first clutch member includes a second gear meshing with the first gear. The second clutch member is secured to the rotary shaft.

The just-described preferred embodiment makes it possible to obtain the foregoing advantageous effects with the power unit in which the rotary shaft is disposed coaxially with the crankshaft.

A vehicle according to the present teaching may be a vehicle including one of the foregoing power units.

### ADVANTAGEOUS EFFECTS OF INVENTION

The present teaching makes it possible to provide a power unit that reduces the frictional resistance between the clutch and the rotary shaft while at the same time prevents an increase in the size thereof, and to provide a vehicle equipped therewith.

### BRIEF DESCRIPTION OF DRAWINGS

[Fig. 1] Fig. 1 is a side view illustrating a motorcycle according to a preferred embodiment.
[Fig. 2] Fig. 2 is a cross-sectional view of a power unit according to a first preferred embodiment, taken along line II-II of Fig. 1.
[Fig. 3] Fig. 3 is a cross-sectional view illustrating a clutch, a rotary shaft, and so forth.
[Fig. 4] Fig. 4 is a plan view of a crankcase.
[Fig. 5] Fig. 5 is a partially enlarged cross-sectional view of a rotary shaft and an oil catch member.
[Fig. 6] Fig. 6 is a side view illustrating a right side face of a second case member.
[Fig. 7] Fig. 7 is a side view illustrating a left side face of the second case member.
[Fig. 8] Fig. 8 is a perspective view illustrating a portion of the left side face of the second case member.
[Fig. 9] Fig. 9 is a perspective view illustrating a portion of the right side face of the second case member.
[Fig. 10] Fig. 10 is a perspective view illustrating a portion of the left side face of the second case member, which illustrates oil flow.
[Fig. 11] Fig. 11 is a perspective view illustrating a portion of the right side face of the second case member, which illustrates oil flow.
[Fig. 12] Fig. 12 is a view illustrating an example of an outer circumferential surface of the rotary shaft and/or an inner circumferential surface of a bore of the clutch housing.
[Fig. 13] Fig. 13 is a view illustrating another example of an outer circumferential surface of the rotary shaft and/or an inner circumferential surface of a bore of the clutch housing.
[Fig. 14] Fig. 14 is a cross-sectional view illustrating a portion of a power unit according to a second preferred embodiment.

### DESCRIPTION OF EMBODIMENTS

### (First Preferred Embodiment)

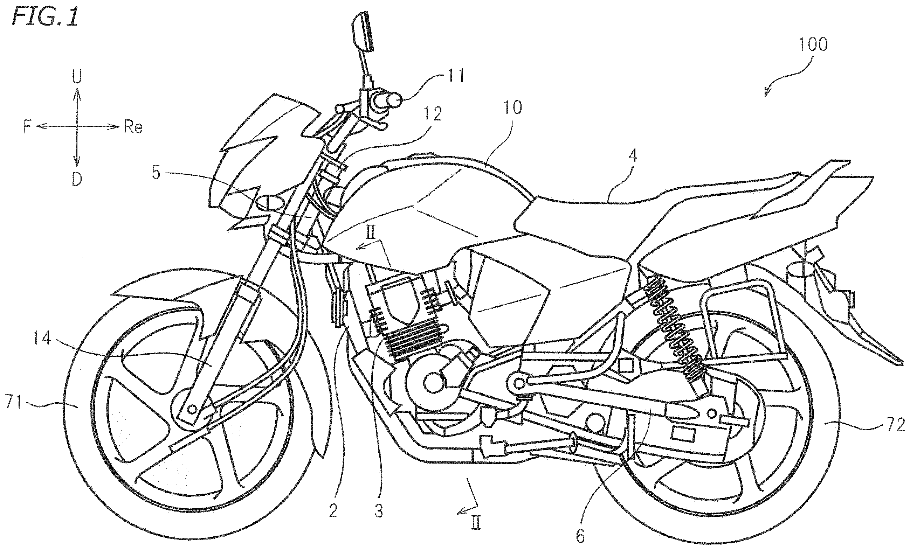

Hereinbelow, one preferred embodiment will be described with reference to the drawings. As illustrated in Fig. 1, a vehicle according to the present preferred embodiment is a straddled vehicle. The vehicle according to the present preferred embodiment is a motorcycle 100, which is one type of the straddled vehicle. The vehicle may, however, to a straddled vehicle other than the motorcycle 100. In addition, the vehicle is not limited to a straddled vehicle. Note that the term "straddled vehicle" means a vehicle on which a rider straddles to ride.

In the following description, the terms "front," "rear," "left," "right," "up," "up," "down," "above," and "below "respectively refer to front, rear, left, right, up, down, above, and below as defined based on the perspective of the rider (not shown) seated on a seat 4 of the motorcycle 100 being at a standstill on a horizontal plane, unless specifically indicated otherwise. Reference characters F, Re, L, R, U, and D in the drawings indicate front, rear, left, right, up, and down, respectively. The terms used to locate elements on the power unit 3 such as "front," "rear," "left," "right," "up," "down," "above" and "down" of the engine 3 respectively refer to front, rear, left, right, up, down, above, and below as they would normally understood when the power unit 3 is mounted on the motorcycle 100 being at a standstill on a horizontal plane.

As illustrated in Fig. 1, the motorcycle 100 has a head pipe 5 and a steering shaft 12 rotatably inserted through the head pipe 5. A handlebar 11 is secured to an upper end portion of the steering shaft 12. A front fork 14 is secured to a bottom end portion of the steering shaft 12. A front wheel 71 is supported at a bottom end portion of the front fork 14. A fuel tank 10 is disposed at the rear of the head pipe 5. A seat 4 is disposed at the rear of the fuel tank 10. The seat 4 is disposed behind the head pipe 5. The head pipe 5 is secured to a body frame 2. The body frame 2 extends rearward from the head pipe 5 as viewed from a side view of the vehicle. The structure of the body frame 2 is not limited in any way. A rear arm 6 is supported swingably on the body frame 2. A rear wheel 72 is supported at a rear portion of the rear arm 6.

A power unit 3 is supported on the body frame 2. In the present preferred embodiment, the power unit 3 is supported non-swingably by the body frame 2. It is also possible, however, that the power unit 3 may be integrated with the rear arm 6 and supported swingably by the body frame 2.

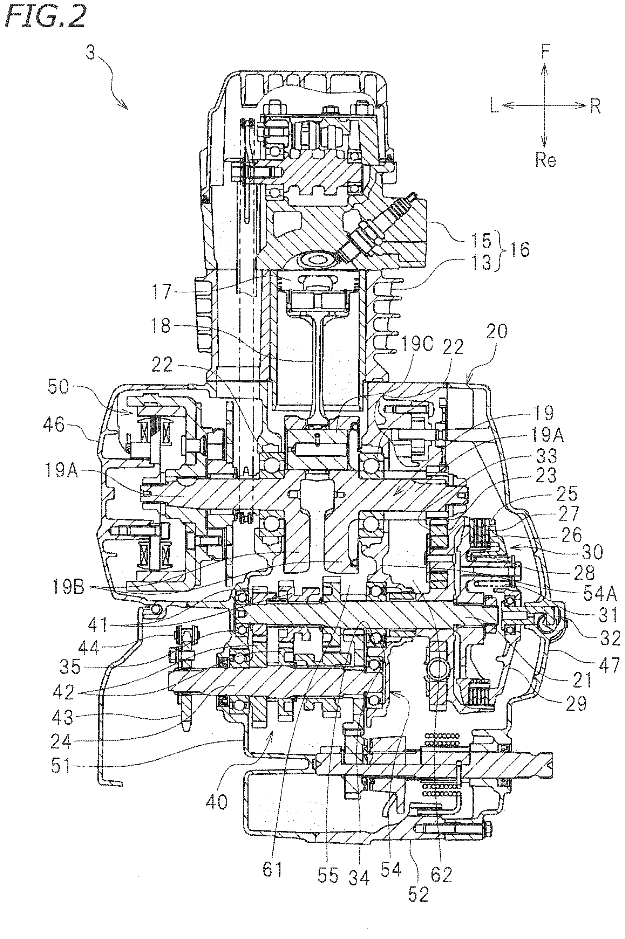

Next, the structure of the power unit 3 will be described. Fig. 2 is a cross-sectional view taken along line II-II of Fig. 1, illustrating the power unit 3. As illustrated in Fig. 2, the power unit 3 includes a cylinder 16 including a cylinder block 13 and a cylinder head 15, and a crankcase 20. The cylinder 16 is connected to the crankcase 20.

The power unit 3 includes a piston 17, a crankshaft 19, a rotary shaft 21, and an output shaft 24. The piston 17 is reciprocatably provided in the cylinder 16. The crankshaft 19 is connected to the piston 17 via a connecting rod 18. The rotary shaft 21 and the output shaft 24 are arranged parallel to the crankshaft 19. The power unit 3 also includes a clutch 30, a transmission 40, and an alternator 50.

The crankshaft 19 is rotatably supported by the crankcase 20 via a bearing 22. The crankshaft 19 includes shaft main parts 19A extending linearly and crank webs 19B extending from the shaft main parts 19A in a direction perpendicular to the axial direction. The crank webs 19B are connected to each other by a crank pin 19C. The connecting rod 18 is connected to the crank pin 19C. The alternator 50 is fitted to a left end portion of the crankshaft 19. A first gear 23 is provided on a right end portion of the crankshaft 19.

The transmission 40 includes a plurality of gears 41 provided on the rotary shaft 21, and a plurality of gears 42 provided on the output shaft 24. The transmission 40 is a stepped-type transmission.

The output shaft 24 is a rotary shaft for taking out the mechanical power of the crankshaft 19. In the present preferred embodiment, a sprocket 43 is secured to a left end portion of the output shaft 24. Although not shown in the drawings, another sprocket is secured to the rear wheel 72 (see Fig. 1). A chain 44 is wrapped around the sprocket 43 and the other sprocket. The mechanical power of the output shaft 24 is transmitted via the chain 44 to the rear wheel 72. Note that although the chain 44 is an example of the power transmission member, the power transmission member is not limited to the chain 44 and may be, for example, a transmission belt or a drive shaft.

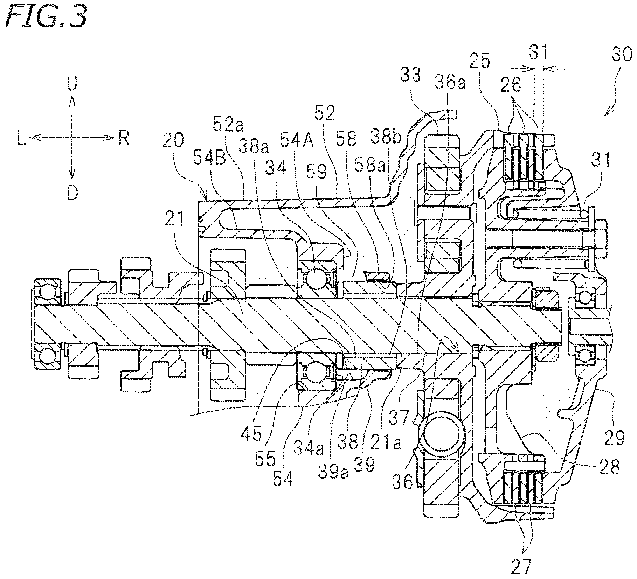

Next, the configuration of the clutch 30 will be described with reference to Fig. 3. The clutch 30 has a clutch housing 25 supported so as to be rotatable relative to the rotary shaft 21, first clutch plates 26 that rotate with the clutch housing 25, second clutch plates 27 capable of making contact with and separating from the first clutch plates 26, and a clutch boss 28 that rotates with the second clutch plates 27 and also rotates with the rotary shaft 21. The clutch housing 25 and the clutch boss 28 are examples of the first clutch member and the second clutch member, respectively. It should be noted, however, that the first clutch member and the second clutch member are not limited to the clutch housing 25 and the clutch boss 28, and their configurations are not limited to specific forms.

The clutch 30 includes a pressure plate 29 movable in an axial direction of the rotary shaft 21 and a spring 31 for biasing the pressure plate 29 toward the first clutch plates 26 and the second clutch plates 27. The first clutch plates 26 and the second clutch plates 27 are pressed against each other by receiving a force from the pressure plate 29. Thereby, the clutch 30 is engaged. When the clutch 30 is engaged, the first clutch plates 26 and the second clutch plates 27 rotate together to transmit mechanical power from the first clutch plates 26 to the second clutch plates 27.

The clutch 30 also includes a clutch release mechanism 32 (not shown in Fig. 3, see Fig. 2) for moving the pressure plate 29 away from the first clutch plates 26 and the second clutch plates 27. The clutch release mechanism 32 moves the pressure plate 29 away from the first clutch plates 26 and the second clutch plates 27 when the rider pulls a clutch lever, which is not shown, for example. When the pressure plate 29 moves away from the first clutch plates 26 and the second clutch plates 27, the first clutch plates 26 and the second clutch plates 27 separate from each other. Thus, the first clutch plates 26 slip against the second clutch plates 27, so that the transmission of mechanical power from the first clutch plates 26 to the second clutch plates 27 is cut off. In other words, the clutch 30 is disengaged.

The clutch housing 25 is provided with a second gear 33 meshing with the first gear 23 of the crankshaft 19. The torque of the crankshaft 19 is transmitted through via the first gear 23 and the second gear 33 to the clutch housing 25. Thus, the clutch housing 25 rotates with the crankshaft 19.

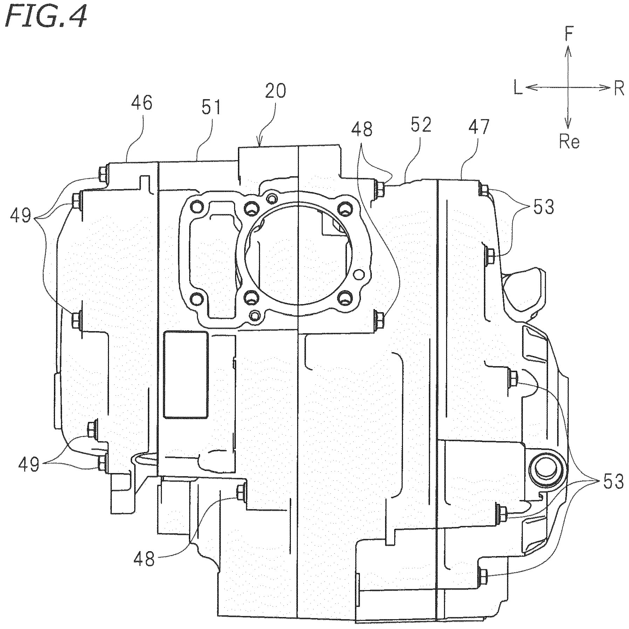

Fig. 4 is a plan view of the crankcase 20. As illustrated in Fig. 4, the crankcase 20 includes a first case member 51, a second case member 52, a first cover 46, and a second cover 47. The first case member 51 and the second case member 52 are secured to each other by bolts 48. The first cover 46 is secured to the first case member 51 by bolts 49. The second cover 47 is secured to the second case member 52 by bolts 53. As illustrated in Fig. 2, the first cover 46 is disposed over a side of the alternator 50. The second cover 47 is provided over a side of the clutch 30. The second cover 47 covers a side of the clutch 30.

As illustrated in Fig. 2, the second case member 52 includes a partition wall 54. The partition wall 54 is provided inside the crankcase 20. At least a portion of the partition wall 54 is provided between the crank webs 19B and the clutch 30 with respect to the axial direction of the crankshaft 19. The partition wall 54 has a through bore 55 through which the rotary shaft 21 passes. As illustrated in Fig. 3, the partition wall 54 includes a vertical wall 54A extending in a radial direction of the rotary shaft 21, and a lateral wall 54B extending from an upper portion of the vertical wall 54A toward the crank webs 19B with respect to the axial direction of the rotary shaft 21. Note that the crankshaft 19 and the rotary shaft 21 are parallel to each other herein, so the axial direction and the radial direction of the rotary shaft 21 respectively have the same meaning as the axial direction and the radial direction of the crankshaft 19 herein. The lateral wall 54B is spaced apart from an outer circumferential wall 52a of the second case member 52. It should be noted, however, that the above-described configuration of the partition wall 54 is merely one example and is not intended to be limiting.

As illustrated in Fig. 3, the rotary shaft 21 is supported by a bearing 34. The bearing 34 is interposed between the rotary shaft 21 and the crankcase 20. The rotary shaft 21 is rotatably supported by the crankcase 20 via a bearing 34. In the present preferred embodiment, the bearing 34 is interposed between the rotary shaft 21 and the second case member 52. The bearing 34 is fitted into the through bore 55 of the partition wall 54. This configuration is, however, merely illustrative. In addition, as illustrated in Fig. 2, another bearing 35 is provided on an end portion of the rotary shaft 21 opposite the one on which the clutch 30 is provided. The other bearing 35 is also interposed between the rotary shaft 21 and the crankcase 20. A gear 41 of the transmission 40 is disposed between the bearing 34 and the bearing 35 with respect to the axial direction of the rotary shaft 21.

In the present preferred embodiment, each of the bearings 34 and 35 is formed by a ball bearing. The bearing 34 includes a (sealing) structure 34a for sealing oil. The bearing 34 is formed by what is called a sealed bearing. It should be noted, however, that the type of the bearings 34 and 35 is not limited to a specific type.

As illustrated in Fig. 3, the clutch housing 25 is spaced apart from the bearing 34 with respect to the axial direction of the rotary shaft 21. A collar 38 is disposed between the bearing 34 and the clutch housing 25, with respect to the axial direction of the rotary shaft 21. The rotary shaft 21 is inserted through the collar 38. The collar 38 may or may not be able to rotate relative to the rotary shaft 21. The collar 38 may be configured to rotate together the rotary shaft 21.

As illustrated in Fig. 3, the clutch housing 25 has a bore 36 through which the rotary shaft 21 is inserted. The inner circumferential surface 36a of the bore 36 faces the outer circumferential surface 21a of the rotary shaft 21. As described previously, the clutch housing 25 is supported so as to be rotatable relative to the rotary shaft 21, and a clearance gap 37 is formed between the outer circumferential surface 21a of the rotary shaft 21 and the inner circumferential surface 36a of the bore 36. While the clutch 30 is being disengaged, the clutch housing 25 rotates relative to the rotary shaft 21. At that time, friction arises between the outer circumferential surface 21a of the rotary shaft 21 and the inner circumferential surface 36a of the bore 36. For this reason, it is necessary to supply oil into the clearance gap 37.

Accordingly, the present preferred embodiment provides an oil catch member 39 for catching oil and supplies the oil collected by the oil catch member 39 to the clearance gap 37. The oil catch member 39 is disposed radially outward of the rotary shaft 21 relative to the outer circumferential surface 21a of the rotary shaft 21. The oil catch member 39 has an inner circumferential surface 39a spaced apart from the outer circumferential surface 21a of the rotary shaft 21. At least a portion of the oil catch member 39 is disposed between the bearing 34 and the clutch housing 25 with respect to the axial direction of the rotary shaft 21. At least a portion of the oil catch member 39 is disposed, with respect to the axial direction of the rotary shaft 21, at a position closer to the clutch housing 25 relative to an end portion of the bearing 34 that faces the clutch housing 25, the position also being closer to the bearing 34 relative to an end portion of the clutch housing 25 that faces the bearing 34.

At least a portion of the oil catch member 39 is disposed radially outward of the rotary shaft 21 relative to the collar 38. In the present preferred embodiment, the entire oil catch member 39 is disposed radially outward of the rotary shaft 21 relative to the collar 38. The collar 38 is disposed between the rotary shaft 21 and the oil catch member 39 with respect to the radial direction of the rotary shaft 21. Such an arrangement is, however, merely exemplary.

The oil catch member 39 is formed integrally with the second case member 52 in the present preferred embodiment, although it may be a separate component. The oil catch member 39 is formed integrally with the second case member 52 by casting, for example. The oil catch member 39 is provided on the partition wall 54. The oil catch member 39 is integrated with the partition wall 54.

The oil catch member 39 defines an oil reservoir space 45 for storing oil. The oil reservoir space 45 is formed between the inner circumferential surface 39a of the oil catch member 39 and the outer circumferential surface 21a of the rotary shaft 21. In the present preferred embodiment, at least a portion of the collar 38 is disposed in the oil reservoir space 45. The oil reservoir space 45 is in communication with the clearance gap 37 between the outer circumferential surface 21a of the rotary shaft 21 and the inner circumferential surface 36a of the bore 36. In the present preferred embodiment, the oil reservoir space 45 is allowed to communicate with the clearance gap 37 through a clearance gap 38b between the outer circumferential surface 21a of the rotary shaft 21 and an inner circumferential surface 38a of the collar 38. It should be noted, however, that the form of communication between the oil reservoir space 45 and the clearance gap 37 is not limited in any way. The oil reservoir space 45 is configured to be able to supply oil to the clearance gap 37.

It is preferable that the length of the oil reservoir space 45 along the axial direction of the rotary shaft 21 be, but not be limited to, greater than the thickness of the first clutch plate 26. The length of the oil reservoir space 45 along the axial direction of the rotary shaft 21 may be two times or more, or three times or more, greater than the thickness of the first clutch plate 26. The length of the oil reservoir space 45 along the axial direction of the rotary shaft 21 may be equal to or greater than the total thickness of all the first clutch plates 26 provided in the clutch 30, or it may be equal to or greater than the total thickness of all the first clutch plates 26 and all the second clutch plates 27 provided in the clutch 30. The length of the oil reservoir space 45 along the axial direction of the rotary shaft 21 may be equal to or greater than the length of the bearing 34 along the axial direction of the rotary shaft 21. Increasing the length of the oil reservoir space 45 along the axial direction of the rotary shaft 21 allows the oil reservoir space 45 to have a large space.

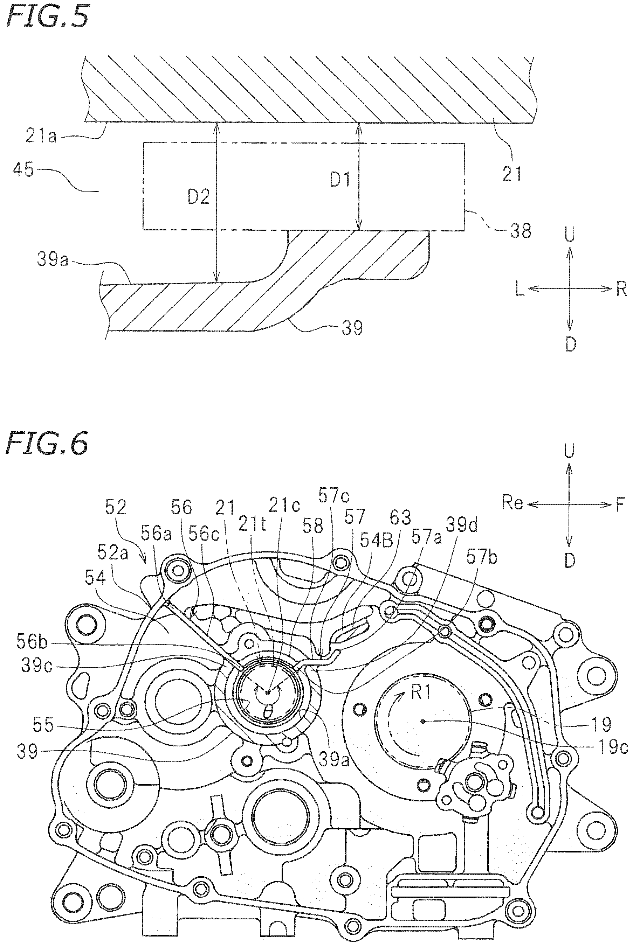

The depth of the oil reservoir space 45 may vary depending on the positions with respect to the axial direction of the rotary shaft 21. The term "the depth of the oil reservoir space 45" means a distance between the outer circumferential surface 21a of the rotary shaft 21 and the inner circumferential surface 39a of the oil catch member 39. As illustrated in Fig. 5, the oil reservoir space 45 has a first depth D1 and a second depth D2 that is greater than the first depth D1. Note that the collar 38 is indicated by a virtual line in Fig. 5. When the greatest distance among the distances along a radial direction of the rotary shaft 21 between the outer circumferential surface 21a of the rotary shaft 21 and the inner circumferential surface 39a of the oil catch member 39 is defined as the "maximum depth" of the oil reservoir space 45, the second depth D2 is the maximum depth in the present preferred embodiment. The maximum depth of the oil reservoir space 45 is greater than the thickness of the first clutch plate 26. The maximum depth of the oil reservoir space 45 may be two times or more, or three times or more, greater than the thickness of the first clutch plate 26. Increasing the maximum depth of the oil reservoir space 45 allows the oil reservoir space 45 to have a large space. It should be noted, however, that the value of the maximum depth of the oil reservoir space 45 is not limited to a specific value.

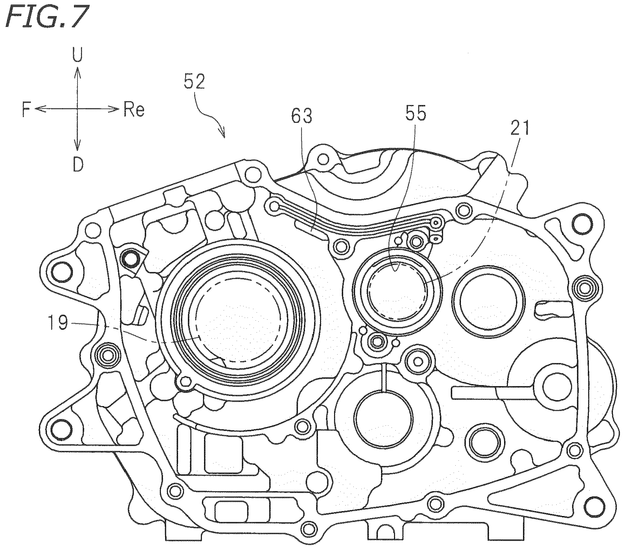

Fig. 6 is a view showing the second case member 52 viewed from the right, and Fig. 7 is a view showing the second case member 52 viewed from the left. It should be noted that in Fig. 6, the oil catch member 39 is indicated by a hatched region in order to emphasize the arrangement and shape of the oil catch member 39. Note that the hatched region in Fig. 6 does not indicate the cross section. As illustrated in Fig. 6, the oil catch member 39 is formed in a circular arc shape when viewed in the axial direction of the rotary shaft 21. The angle θ of the inner circumferential surface 39a of the oil catch member 39 about the axial center 21c of the rotary shaft 21 may be, but is not limited to be, 120 degrees or greater, or 180 degrees or greater, for example. In the present preferred embodiment, the angle θ is 260 degrees. A first circumferential end portion 39c and a second circumferential end portion 39d of the oil catch member 39 are positioned upward relative to the axial center 21c of the rotary shaft 21. The oil catch member 39 is disposed downward relative to the top end 21t of the rotary shaft 21.

Ribs 56 and 57 are disposed above the oil catch member 39. The ribs 56 and 57 are inclined downward toward the oil catch member 39 when viewed in the axial direction of the rotary shaft 21. The shapes of the ribs 56 and 57 are not limited. The ribs 56 and 57 may be either connected to the outer circumferential wall 52a of the second case member 52 or spaced apart from the outer circumferential wall 52a of the second case member 52. The ribs 56 and 57 may be either connected to the oil catch member 39 or spaced apart from the oil catch member 39. Herein, an upper end portion 56a of the rib 56 is connected to the outer circumferential wall 52a of the second case member 52, while a lower end portion 56b of the rib 56 is connected to the first end portion 39c of the oil catch member 39. An upper end portion 57a of the rib 57 is spaced apart from the outer circumferential wall 52a of the second case member 52, while a lower end portion 57b of the rib 57 is connected to the second end portion 39d of the oil catch member 39. The ribs 56 and 57 may be in a linear shape, in a partially bent shape, or in a partially or entirely curved shape. Herein, the rib 56 is formed in a linear shape. The rib 57 is in a partially bent shape.

The ribs 56 and 57 protrude from the partition wall 54. The ribs 56 and 57 protrude from the partition wall 54 toward the clutch 30. The ribs 56 and 57 may be either separate components from the partition wall 54, or may be integrally formed with the partition wall 54. The ribs 56 and 57 have respective upper surfaces 56c and 57c that are parallel to the axial direction of the rotary shaft 21. The ribs 56 and 57 serve to guide oil toward the oil catch member 39.

As illustrated in Fig. 3, an oil introducing member 58 is disposed above the oil catch member 39. The oil introducing member 58 is, however, not always necessary, and it may be omitted. The oil introducing member 58 is disposed above the rotary shaft 21. The oil introducing member 58 is disposed above the collar 38. The oil introducing member 58 has an inner circumferential surface 58a positioned radially outward of the rotary shaft 21 relative to the outer circumferential surface 21a of the rotary shaft 21. The inner circumferential surface 58a faces the outer circumferential surface 21a. The oil introducing member 58 is disposed between the bearing 34 and the clutch housing 25 with respect to the axial direction of the rotary shaft 21. The oil introducing member 58 is disposed, with respect to the axial direction of the rotary shaft 21, at a position closer to the clutch housing 25 relative to an end portion of the bearing 34 that faces the clutch housing 25, the position also being closer to the bearing 34 relative to an end portion of the clutch housing 25 that faces the bearing 34.

The oil introducing member 58 is spaced apart from the bearing 34. An opening 59 is formed between the oil introducing member 58 and the bearing 34 with respect to the axial direction of the rotary shaft 21. Although the details will be described later, the opening 59 serves to introduce oil into the oil reservoir space 45.

As illustrated in Fig. 2, the partition wall 54 divides the internal space of the crankcase 20 into a space 61 adjacent to the crank webs 19B and a space 62 adjacent to the clutch 30. As illustrated in Fig. 6, a communication port 63 for allowing the space 61 and the space 62 to communicate with each other is formed in a portion of the partition wall 54 that is upward relative to the oil catch member 39. In the present preferred embodiment, the communication port 63 allows the space 61 to the left of the partition wall 54 and the space 62 to the right of the partition wall 54 to communicate with each other. In Fig. 6, the communication port 63 is hatched, in order to emphasize the position and shape of the communication port 63. Note that the hatched region in Fig. 6 does not indicate the cross section. Herein, the communication port 63 is formed in the lateral wall 54B of the partition wall 54. However, the region of the partition wall 54 in which the communication port 63 is to be formed is not limited thereto. The communication port 63 may be formed in the vertical wall 54A of the partition wall 54.

At least a portion of the communication port 63 is positioned upward relative to the oil catch member 39. Herein, the entire communication port 63 is positioned upward relative to the oil catch member 39. In addition, at least a portion of the communication port 63 is positioned upward relative to the rotary shaft 21. Herein, the entire communication port 63 is positioned upward relative to the rotary shaft 21. Moreover, at least a portion of the communication port 63 is positioned upward relative to the crankshaft 19. Herein, the entire communication port 63 is positioned upward relative to the crankshaft 19. Furthermore, at least a portion of the communication port 63 is positioned upward relative to the oil introducing member 58. Herein, the entire communication port 63 is positioned upward relative to the oil introducing member 58.

At least a portion of the communication port 63 is positioned closer to the crankshaft 19 relative to the axial center 21c of the rotary shaft 21 and positioned closer to the rotary shaft 21 relative to the axial center 19c of the crankshaft 19. In addition, at least a portion of the communication port 63 is positioned frontward relative to the axial center 21c of the rotary shaft 21 and rearward relative to the axial center 19c of the crankshaft 19. Herein, the entire communication port 63 is positioned frontward relative to the axial center 21c of the rotary shaft 21 and rearward relative to the axial center 19c of the crankshaft 19. However, the above-described arrangement of the communication port 63 is merely one example, and is not intended to be limiting.

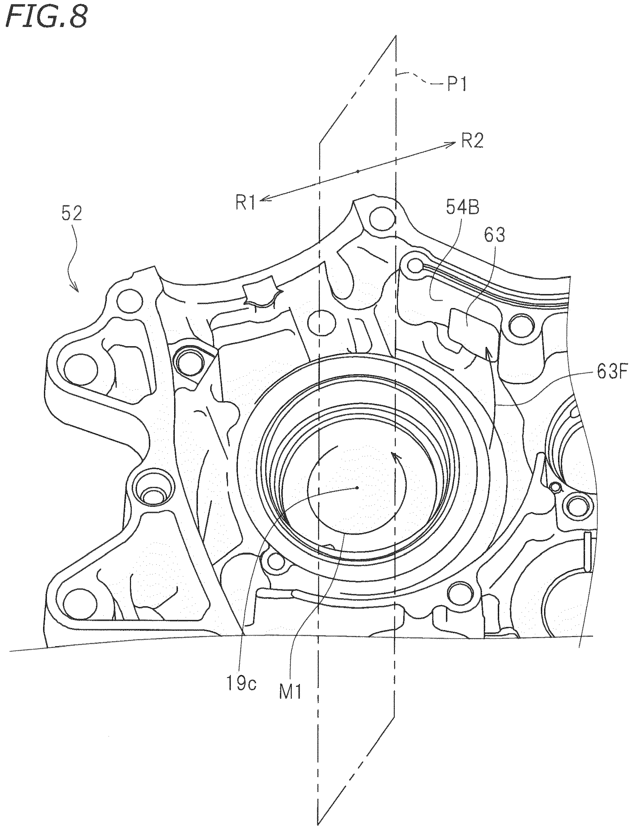

In Fig. 8, reference character M1 indicates the direction of rotation of the crankshaft 19. Of the two regions R1 and R2 divided by a vertical plane P1 through the axial center 19c of the crankshaft 19, as shown in Fig. 8, one in which the crank webs 19B (not shown in Fig. 8, see Fig. 2) of the crankshaft 19 move downward is defined as a downward region R1, while the other one in which the crank webs 19B move upward is defined as an upward region R2. The communication port 63 is positioned in the upward region R2. Note that the vertical plane P1 is a plane perpendicular to the horizontal plane. The communication port 63 opens downward in a lower surface of the lateral wall 54B of the partition wall 54. As a result, the oil scooped up by the crank webs 19B (indicated by the arrow 63F in Fig. 8) can easily flow into the communication port 63. The communication port 63 is disposed at a position that enables the oil scooped up by the crank webs 19B to easily flow into. However, the above-described arrangement of the communication port 63 is merely one example, and it is also possible to dispose the communication port 63 in the downward region R1.

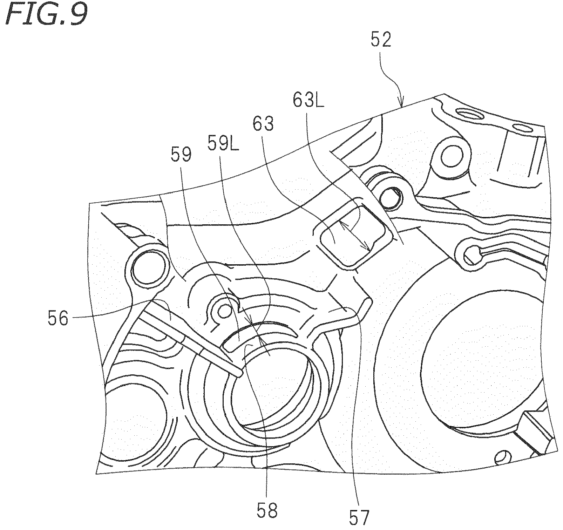

As illustrated in Fig. 9, the communication port 63 is formed in a quadrangular shape. The length 63L of the communication port 63 along the axial direction of the rotary shaft 21 is longer than the length 59L of the opening 59 along the axial direction of the rotary shaft 21. However, the above-described shape and dimensions of the communication port 63 are merely exemplary, and the shape and dimensions of the communication port 63 are not limited to specific shapes or dimensions.

The configuration of the power unit 3 has been described above. Next, the following describes the operation of supplying oil to the clearance gap 37 between the outer circumferential surface 21a of the rotary shaft 21 and the inner circumferential surface 36a of the bore 36 of the clutch housing 25.

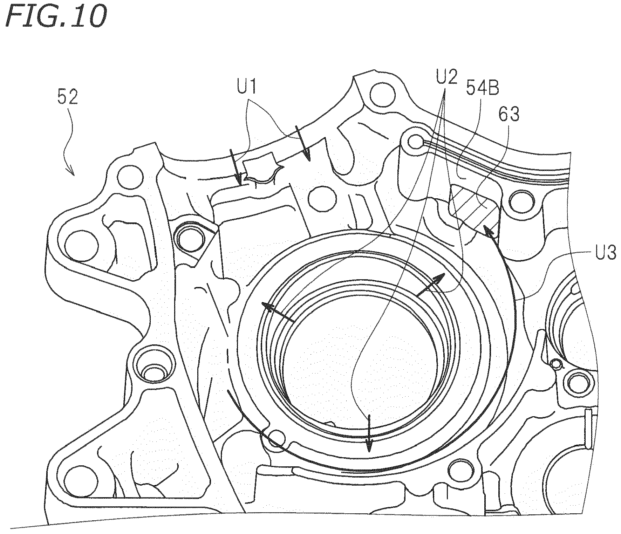

As indicated by the arrows U1 in Fig. 10, a portion of the oil that has lubricated the cylinder 16 flows into the crankcase 20. As indicated by the arrows U2 in Fig. 10, a portion of the oil that has lubricated the crankshaft 19 is discharged radially outward of the crankshaft 19. In addition, although not shown in the drawings, oil is stored in the bottom portion of the crankcase 20, and a portion of the oil is scooped up by the crank webs 19B. These portions of the oil scatters around within the space 61 in the crankcase 20. The oil scattering around in the space 61 is introduced into the communication port 63 by the rotating crank webs 19B, as indicated by the arrow U3. The oil that has been introduced into the communication port 63 is guided through the communication port 63 into the space 62. Note that in Fig. 10, the communication port 63 is hatched so that the communication port 63 can be seen clearly.

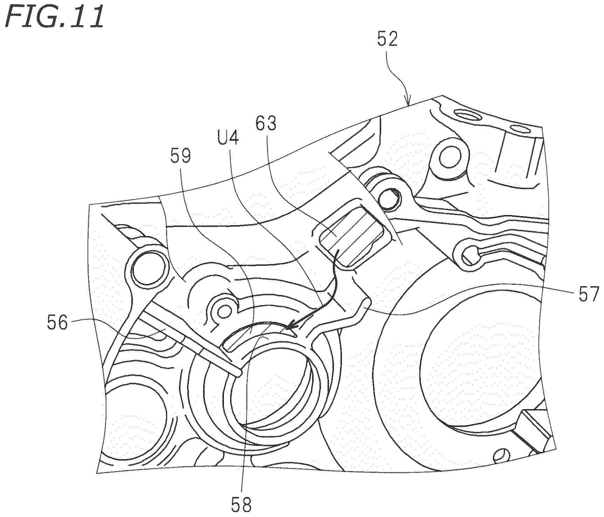

As indicated by the arrow U4 in Fig. 11, a portion of the oil that has been introduced through the communication port 63 into the space 62 flows downward along the rib 57. Another portion of the oil that has been introduced through the communication port 63 into the space 62 scatters around within the space 62, but that portion of the oil is caught by the rib 56. The oil caught by the rib 56 flows downward along the rib 56. These portions of the oil is introduced through the opening 59 into the oil reservoir space 45. Still another portion of the oil that has been introduced through the communication port 63 into the space 62 directly drops through the opening 59 into the oil reservoir space 45. Note that in Fig. 11, the communication port 63 and the opening 59 are hatched so that the communication port 63 and the opening 59 can be seen clearly.

As illustrated in Fig. 3, because the clearance gap 37 and the oil reservoir space 45 are in communication with each other, the oil that has been guided into the oil reservoir space 45 can be supplied to the clearance gap 37. As a result, the rotary shaft 21 and the clutch housing 25 are lubricated by the oil.

As thus far described, the power unit 3 according to the present preferred embodiment makes it possible to supply oil from the oil reservoir space 45 formed between the inner circumferential surface 39a of the oil catch member 39 and the outer circumferential surface 21a of the rotary shaft 21 to the clearance gap 37 between the outer circumferential surface 21a of the rotary shaft 21 and the inner circumferential surface 36a of the bore 36 of the clutch housing 25. The oil serves to reduce the frictional resistance between the rotary shaft 21 and the clutch housing 25. With the power unit 3 according to the present preferred embodiment, it is not necessary to form a large diameter oil supply passage inside the rotary shaft 21 to supply oil to the clearance gap 37. In the present preferred embodiment, the oil supply passage for supplying oil to the clearance gap 37 is not formed inside the rotary shaft 21. This enables the rotary shaft 21 to have a smaller diameter,

It is also possible that the oil supply passage for supplying oil to the clearance gap 37 may be formed inside the rotary shaft 21. In this case, because the oil is supplied to the clearance gap 37 also from the oil reservoir space 45, the oil supply passage inside the rotary shaft 21 may be made smaller. Therefore, the diameter of the rotary shaft 21 can be made small in this case as well.

With the power unit 3, a large diameter oil passage for supplying oil to the oil supply passage inside the rotary shaft 21 does not need to be provided in the other portion of the power unit 3.

Therefore, the present preferred embodiment makes it possible to prevent an increase in size of the power unit 3 while reducing the frictional resistance of the clutch 30.

As illustrated in Fig. 6, the angle θ of the inner circumferential surface 39a of the oil catch member 39 about the axial center 21c of the rotary shaft 21 is 120 degrees or greater. This allows the oil reservoir space 45 to have a large space. Thus, because the oil reservoir space 45 can store a larger amount of oil, it is possible to supply the oil steadily to the clearance gap 37. As a result, the frictional resistance can be reduced steadily.

As illustrated in Fig. 3, the length of the oil reservoir space 45 along the axial direction of the rotary shaft 21 is greater than the thickness of the first clutch plate 26. Because the oil reservoir space 45 is ensured to have a large space, the oil reservoir space 45 can store a larger amount of oil. Therefore, oil can be supplied steadily to the clearance gap 37, and frictional resistance can be reduced steadily.

As illustrated in Figs. 3 and 5, the maximum depth D2 of the oil reservoir space 45 is greater than the thickness S1 of the first clutch plate 26. When the maximum depth D2 of the oil reservoir space 45 is sufficiently deep, the oil reservoir space 45 can store a large amount of oil. Therefore, oil can be supplied steadily to the clearance gap 37, and frictional resistance can be reduced steadily.

As illustrated in Fig. 3, a collar 38 is disposed between the bearing 34 and the clutch housing 25 in the present preferred embodiment. It does not mean that a portion of the clutch housing 25 is disposed closer to the bearing 34 relative to an end portion of the oil catch member 39 that faces the clutch housing 25. Therefore, the dimension of the clutch housing 25 along the axial direction can be kept small, and accordingly, the size of the clutch housing 25 can be reduced. Moreover, because the dimension of the clutch housing 25 along the axial direction can be kept small, the contact area between the outer circumferential surface 21a of the rotary shaft 21 and the inner circumferential surface 36a of the bore 36 of the clutch housing 25 can be reduced. As a result, the frictional resistance can be reduced.

It should be noted, however, that the collar 38 is not always necessary. It is also possible that a portion of the clutch housing 25 is disposed closer to the bearing 34 relative to an end portion of the oil catch member 39 that faces the clutch housing 25. A portion of the clutch housing 25 may form the collar 38.

In the present preferred embodiment, the oil stored in a bottom portion of the crankcase 20 is scooped up by the crank webs 19B in association with the rotation of the crankshaft 19, and is sent through the communication port 63 of the partition wall 54 to a region above the oil catch member 39. This oil is caught by the oil catch member 39 and is stored in the oil reservoir space 45. As a result, the oil is stored in the reservoir space 45 steadily. This enables a steady supply of oil to the clearance gap 37, thus resulting in a steady reduction in the frictional resistance.

In the present preferred embodiment, the oil catch member 39 is formed integrally with the partition wall 54. This reduces the parts count, thus reducing the manufacturing costs of the power unit 3.

In the present preferred embodiment, the partition wall 54 includes the vertical wall 54A and the lateral wall 54B (see Fig. 3). A space for collecting the scattered oil is formed above the lateral wall 54B. The scattered oil runs along the lateral wall 54B and the vertical wall 54A, and is guided into the oil reservoir space 45. Therefore, the oil can be stored efficiently in the oil reservoir space 45. This enables a steady supply of oil to the clearance gap 37, resulting in a steady reduction in the frictional resistance.

In the present preferred embodiment, the oil introducing member 58 dams up the oil that flows from the bearing 34 toward the clutch housing 25 so as to introduce the oil through the opening 59 into the oil reservoir space 45. As a result, the oil can be stored efficiently in the oil reservoir space 45. This enables a steady supply of oil to the clearance gap 37, thus resulting in a steady reduction in the frictional resistance.

In the present preferred embodiment, the oil located above the oil catch member 39 flows along the ribs 56 and 57 and is guided into the oil catch member 39. Therefore, the oil can be stored efficiently in the oil reservoir space 45. This enables a steady supply of oil to the clearance gap 37, resulting in a steady reduction in the frictional resistance.

In the present preferred embodiment, the bearing 34 includes a (sealing) structure 34a for sealing oil. This prevents the oil stored in the oil reservoir space 45 from leaking through the bearing 34. As a result, the oil reservoir space 45 can store the oil stably.

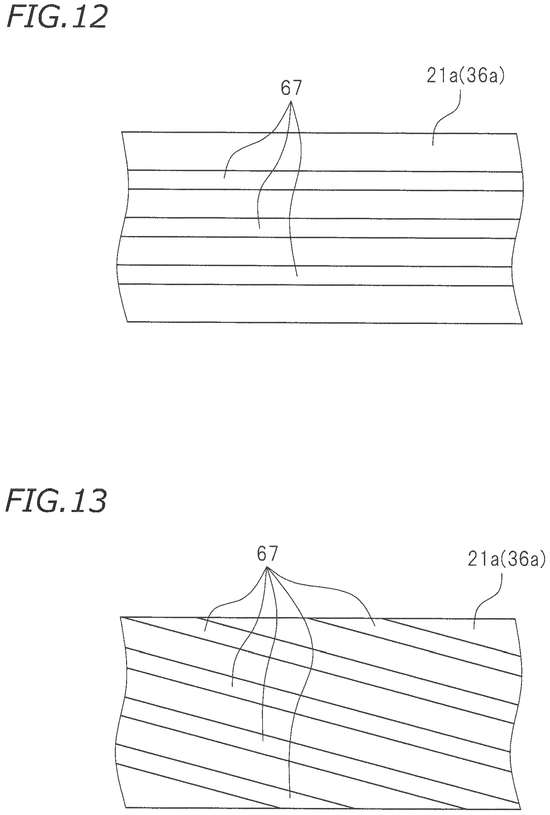

In the above-described preferred embodiment, both the outer circumferential surface 21a of the rotary shaft 21 and the inner circumferential surface 36a of the bore 36 of the clutch housing 25, which form the clearance gap 37, are flat and smooth surfaces. However, it is also possible that either one or both of the outer circumferential surface 21a of the rotary shaft 21 and the inner circumferential surface 36a of the bore 36 may have a groove formed therein. For example, as illustrated in Fig. 12, linear grooves 67 extending in the axial direction may be formed in either one or both of the outer circumferential surface 21a of the rotary shaft 21 and the inner circumferential surface 36a of the bore 36. Alternatively, as illustrated in Fig. 13, spiral grooves 67 may be formed in either one or both of the outer circumferential surface 21a of the rotary shaft 21 and the inner circumferential surface 36a of the bore 36. It should be noted, however, that the grooves 67 are merely one example, and the shape and dimensions thereof are not limited to specific shapes and dimensions. Because the outer circumferential surface 21a of the rotary shaft 21 and/or the inner circumferential surface 36a of the bore 36 is/are provided with the grooves 67 formed therein, the oil is allowed to easily flow through the clearance gap 37. As a result, the oil stored in the oil reservoir space 45 can be supplied to the clearance gap 37 desirably, so that the frictional resistance can be reduced effectively.

### (Second Preferred Embodiment)

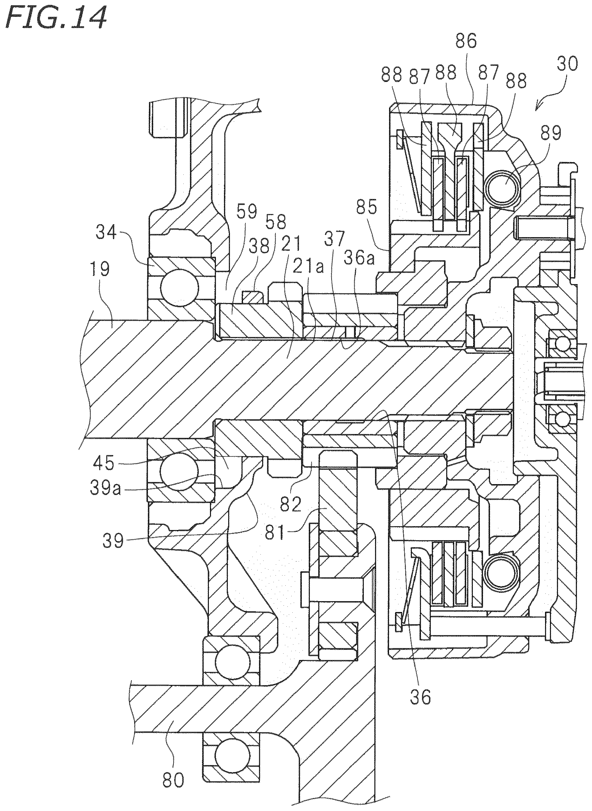

In the first preferred embodiment, the rotary shaft 21 is disposed parallel to the crankshaft 19. The rotary shaft 21, however, need not always be disposed parallel to the crankshaft 19. For example, as illustrated in Fig. 14, the rotary shaft 21 may be disposed coaxially with the crankshaft 19 and may be formed integrally with the crankshaft 19. In the following description, the same or corresponding parts or components as described in the first preferred embodiment are designated by the same reference symbols, and a further description thereof will be omitted.

In the preferred embodiment shown in Fig. 14, the clutch 30 is a centrifugal clutch. The clutch 30 has a clutch boss 85 supported so as to be rotatable relative to the rotary shaft 21, first clutch plates 87 that rotate with the clutch boss 85, second clutch plates 88 capable of making contact with and separating from the first clutch plates 87, and a clutch housing 86 that rotates with the second clutch plates 88 and also rotates with the rotary shaft 21. In the present preferred embodiment, the clutch boss 85 and the clutch housing 86 are examples of the first clutch member and the second clutch member, respectively. As the rotational speed of the rotary shaft 21 increases, the centrifugal weight 89 moves radially outward, causing the first clutch plates 87 and the second clutch plates 88 to be pressed against each other, so as to bring the clutch 30 into engagement. As the rotational speed of the rotary shaft 21 decreases, the centrifugal weight 89 moves radially inward, causing the first clutch plates 87 and the second clutch plates 88 to separate from each other, so as to bring the clutch 30 into disengagement.

The power unit 3 according to the present preferred embodiment further includes another rotary shaft 80 having a first gear 81. The rotary shaft 80 is disposed parallel to the rotary shaft 21. The clutch boss 85 includes a second gear 82 meshing with the first gear 81. The clutch housing 86 is secured to the rotary shaft 21. The second gear 82 has a bore 36 through which the rotary shaft 21 is inserted. The outer circumferential surface 21a of the rotary shaft 21 is slidable relative to the inner circumferential surface 36a of the bore 36. A clearance gap 37 is formed between the outer circumferential surface 21a of the rotary shaft 21 and the inner circumferential surface 36a of the bore 36.

In the present preferred embodiment as well, the oil reservoir space 45 is formed between the inner circumferential surface 39a of the oil catch member 39 and the outer circumferential surface 21a of the rotary shaft 21. The oil reservoir space 45 is in communication with the clearance gap 37. The oil in the oil reservoir space 45 is supplied to the clearance gap 37. This serves to reduce the frictional resistance between the rotary shaft 21 and the clutch boss 85. No oil supply passage for supplying oil to the clearance gap 37 is formed inside the rotary shaft 21. It is possible, however, that an oil supply passage may be provided inside the rotary shaft 21.

Although not shown in the drawings, the rotary shaft 80 is connected to the output shaft 24 via the transmission 40. The rest of the configurations are similar to the first preferred embodiment, and therefore a further description thereof will be omitted.

The present preferred embodiment also makes it possible to obtain the same advantageous effects as obtained in the first preferred embodiment. It is possible to reduce the frictional resistance between the rotary shaft 21 of the clutch 30 and the clutch boss 85 while at the same time prevent an increase in the size of the power unit 3.

### REFERENCE SIGNS LIST

- 3: -- Power unit
- 16: -- Cylinder
- 17: -- Piston
- 19: -- Crankshaft
- 20: -- Crankcase
- 21: -- Rotary shaft
- 25: -- Clutch housing
- 26: -- First clutch plate
- 27: -- Second clutch plate
- 28: -- Clutch boss
- 30: -- Clutch
- 34: -- Bearing
- 39: -- Oil catch member
- 45: -- Oil reservoir space

## Claims

1. A power unit (3) comprising:
a cylinder (16);
a piston (17) reciprocatably provided in the cylinder (16); a crankshaft (19) connected to the piston (17) via a connecting rod (18); a rotary shaft (21) including an outer circumferential surface (21a) and being allowed to be rotatable by a driving force of the crankshaft (19); a clutch (30) attached to the rotary shaft (21);
a crank case (20) accommodating the crankshaft (19), the rotary shaft (21), and the clutch (30); and
a bearing (34) interposed between the rotary shaft (21) and the crank case (20), and
wherein:
the clutch (30) comprises a first clutch member (25,85) supported so as to be rotatable relative to the rotary shaft (21), a first clutch plate (26,87) rotating with the first clutch member (25,85), a second clutch plate (27,88) capable of making contact with and separating from the first clutch plate (26,87), and a second clutch member (28,86) rotating with the second clutch plate (27,88) and also rotating with the rotary shaft (21);
the first clutch member (25,85) includes a bore (36) through which the rotary shaft (21) is inserted and having an inner circumferential surface (36a),
wherein the inner circumferential surface (36a) of the bore (36) of the first clutch member (25,85) is facing the outer circumferential surface (21a) of the rotary shaft (21);
the power unit (3) further comprising an oil catch member (39) positioned radially outward of the rotary shaft (21) relative to the outer circumferential surface (21a) of the rotary shaft (21) and having an inner circumferential surface (39a) spaced apart from the outer circumferential surface (21a);
at least a portion of the oil catch member (39) is disposed, with respect to the axial direction of the rotary shaft (21), at a position closer to the first clutch member (25,85) relative to an end portion of the bearing (34) that faces the first clutch member (25,85), the position also being closer to the bearing (34) relative to an end portion of the first clutch member (25,85) that faces the bearing (34); and
an oil reservoir space (45) is formed between the inner circumferential surface (39a) of the oil catch member (39) and the outer circumferential surface (21a) of the rotary shaft (21), the oil reservoir space (45) storing oil and communicating with a clearance gap (37) between the outer circumferential surface (21a) of the rotary shaft (21) and the inner circumferential surface (36a) of the bore (36) of the first clutch member (25,85), **characterized in that** the crankshaft (19) includes a shaft main part (19A) extending linearly and a crank web (19B) extending in a direction perpendicular to the axial direction;
the power unit (3) further comprising a partition wall (54) provided in the crank case (20), at least a portion of the partition wall (54) being provided between the crank web (19B) and the clutch (30) with respect to the axial direction of the crankshaft (19), and the partition wall (54) having a through bore (55) through which the rotary shaft (21) passes, and wherein the bearing (34) is fitted in the through bore (55) of the partition wall (54); and a communication port (63) is formed in a portion of the partition wall (54), the communication port (63) allowing a space (61), defined by the partition wall (54), that is adjacent to the crank web (19B) and a space (62), defined by the partition wall (54), that is adjacent to the clutch (30) to communicate with each other.

2. The power unit (3) according to claim 1, wherein the inner circumferential surface (39a) of the oil catch member (39) has an angle (θ) of 120 degrees or greater around an axial center (21c) of the rotary shaft (21).

3. The power unit (3) according to claim 1 or 2, wherein a length of the oil reservoir space (45) along the axial direction of the rotary shaft (21) is greater than a thickness (S1) of the first clutch plate (26,87).

4. The power unit (3) according to any one of claims 1 to 3, wherein the oil reservoir space (45) has a maximum depth greater than the thickness (S1) of the first clutch plate (26,87).

5. The power unit (3) according to any one of claims 1 to 4, further comprising:
a collar (38) disposed between the bearing (34) and the first clutch member (25,85) with respect to the axial direction of the rotary shaft (21), and through which the rotary shaft (21) is inserted; and wherein
at least a portion of the oil catch member (39) is disposed radially outward of the rotary shaft (21) relative to the collar (38).

6. The power unit (3) according to any one of claims 1 to 5, wherein the oil catch member (39) is formed integrally with the partition wall (54).

7. The power unit (3) according to any one of claims 1 to 6, wherein the partition wall (54) comprises a first wall (54A) extending in a radial direction of the crankshaft (19), and a second wall (54B) extending from a portion of the vertical wall (54A) toward the crank web (19B) with respect to an axial direction of the crankshaft (19).

8. The power unit (3) according to any one of claims 1 to 7, further comprising:
an oil introducing member (58) including an inner circumferential surface (58a) positioned radially outward of the rotary shaft (21) relative to the outer circumferential surface (21a) of the rotary shaft (21), and disposed, when the power unit (3) is mounted on a vehicle,
above the oil catch member (39), and wherein:
the oil introducing member (58) is disposed, with respect to the axial direction of the rotary shaft (21), at a position closer to the first clutch member (25,85) relative to an end portion of the bearing (34) that faces the first clutch member (25,85), the position also being closer to the bearing (34) relative to an end portion of the first clutch member (25,85) that faces the bearing (34), the oil introducing member (58) being spaced apart from the bearing (34); and
an opening (59) for introducing oil into the oil reservoir space (45) is formed between the oil introducing member (58) and the oil reservoir space (45) with respect to the axial direction of the rotary shaft (21).

9. The power unit (3) according to any one of claims 1 to 8, further comprising a rib (57,56) disposed between the bearing (34) and the first clutch member (25,85) with respect to the axial direction of the rotary shaft (21) and inclined downward toward the oil catch member (39).

10. The power unit (3) according to any one of claims 1 to 9, wherein the bearing (34) includes a sealing structure (34) for sealing oil.

11. The power unit (3) according to any one of claims 1 to 10, wherein the outer circumferential surface (21a) of the rotary shaft (21) and/or the inner circumferential surface (36a) of the bore (36) of the first clutch member (25,85) is/are provided with a groove (67).

12. The power unit (3) according to any one of claims 1 to 11, further comprising:
a first gear (23) provided on the crankshaft (19), and wherein:
the rotary shaft (21) is disposed parallel to the crankshaft (19);
the first clutch member (25,85) includes a second gear (33) meshing with the first gear (23);
the second clutch member (28,86) is secured to the rotary shaft (21), and
the power unit (3) further comprising:
an output shaft (24) disposed parallel to the rotary shaft (21); and
a transmission (40) coupled to the rotary shaft (21) and the output shaft (24).

13. The power unit (3) according to any one of claims 1 to 11, further comprising:
the rotary shaft (21) is disposed coaxially with the crankshaft (19) and is formed integrally with the crankshaft (19); and the power unit (3) further comprising:
another rotary shaft (80) disposed parallel to the rotary shaft (21) and including a first gear (81), and wherein:
the first clutch member (85) includes a second gear (82) meshing with the first gear (81); and
the second clutch member (86) is secured to the rotary shaft (21).

14. A vehicle comprising a power unit (3) according to any one of claims 1 to 13.

## Patentansprüche

1. Eine Leistungs-Einheit (3), die umfasst:
einen Zylinder (16);
einen Kolben (17), der hin- und hergehend in dem Zylinder (16) vorgesehen ist; einer Kurbel-Welle (19), die mit dem Kolben (17) über eine Kolben-Stange (18) verbunden ist;
eine Dreh-Welle (21), die eine äußere Umfangsfläche (21a) beinhaltet, und der gestattet ist drehbar durch eine Antriebs-Kraft der Kurbel-Welle (19) zu sein; eine Kupplung (30), die an der Dreh-Welle (21) angebracht ist;
ein Kurbel-Gehäuse (20), welches die Kurbel-Welle (19), die Dreh-Welle (21) und die Kupplung (30) aufnimmt; und
ein Lager (34), das zwischen der Dreh-Welle (21) und der Kurbel-Welle (20) zwischengesetzt ist, und wobei:
die Kupplung (30) umfasst, ein erstes Kupplungs-Element (25, 85), das gelagert ist, so dass es relativ zu der Dreh-Welle (21) drehbar ist, eine erste Kupplungs-Platte (26, 87), die drehbar mit dem ersten Kupplungs-Element (25, 25) ist, eine zweite Kupplungs-Platte (27, 28), die in der Lage ist, Kontakt mit und getrennt von der ersten Kupplungs-Platte (26, 87) zu machen, und ein zweites Kupplungs-Element (28, 86), das mit der zweiten Kupplungs-Platte (27, 88) dreht, und ebenso mit der Dreh-Welle (21) dreht;
das erste Kupplungs-Element (25, 85) beinhaltet eine Bohrung (36), durch welche die Dreh-Welle (21) eingesetzt ist, und das eine innere Umfangsfläche (36a) hat,
wobei die innere Umfangsfläche (36a) der Bohrung (36) des ersten Kupplungs-Elements (25, 85) der äußeren Umfangsfläche (21a) der Dreh-Welle (21) zugewandt ist;
die Leistungs-Einheit (3) umfasst weiter ein Öl-Fang-Element (39), das radial außerhalb von der Dreh-Welle (21), relativ zu der äußeren Umfangsfläche (21a) der Dreh-Welle (21), positioniert ist, und eine innere Umfangsfläche (39a), beabstandet von der äußeren Umfangsfläche (21a), hat;
zumindest ein Teil des Öl-Fang-Elements (39) ist, mit Bezug auf die Axial-Richtung der Dreh-Welle (21), an einer Position näher zu dem ersten Kupplungs-Element (25, 85), relativ zu einem äußeren Endabschnitt des Lagers (34), das dem ersten Kupplungs-Element (25, 85) zugewandt ist, positioniert, die Position ist ebenso näher zu dem Lager (34), relativ zu einem Endabschnitt des ersten Kupplungs-Elements (25, 85), das dem Lager (34) zugewandt ist; und
ein Öl-Aufnahme-Raum (45) zwischen der inneren Umfangsfläche (39a) des Öl-Fang-Elements (39) und der äußeren Umfangsfläche (21a) der Dreh-Welle (21) ausgebildet ist, der Öl-Aufnahme-Raum lagert Öl, und kommuniziert mit einem Frei-Raum-Spalt (37) zwischen der äußeren Umfangsfläche (21a) der Dreh-Welle (21) und der inneren Umfangsfläche (36a) der Bohrung (36) des ersten Kupplungs-Elements (25, 85), **dadurch gekennzeichnet, dass**
die Kurbel-Welle (19) einen Wellen-Haupt-Teil (19a) beinhaltet, der sich linear erstreckt, und eine Kurbel-Wange (19b) beinhaltet, die sich in eine Richtung senkrecht zu der Axial-Richtung erstreckt;
die Leistungs-Einheit (3) umfasst weiter eine Abteilungs-Wand (54), die in dem Kurbel-Gehäuse (20) vorgesehen ist, zumindest ein Abschnitt der Abtrennungs-Wand (54) ist zwischen der Kurbel-Wange (19b) und der Kupplung (30), mit Bezug auf die Axial-Richtung der Kurbel-Welle (19), vorgesehen, und die Abtrennungs-Wand (54) hat eine Durchgangs-Bohrung (55), durch welche die Dreh-Welle (21) hindurchtritt, und wobei das Lager (34) in die Durchgangs-Bohrung (55) der Abteilungs-Wand (54) eingesetzt ist; und
ein Kommunikations-Anschluss (63) ist in einem Abschnitt der Abteilungs-Wand (54) ausgebildet, der Kommunikations-Anschluss (63) gestattet einem Raum (61), definiert durch die Abteilungs-Wand (54), der benachbart zu der Kurbel-Wange (19b) ist, und einem Raum (62), definiert durch die Abteilungs-Wand (54), der benachbart zu der Kupplung (30) ist, miteinander zu kommunizieren.

2. Die Leistungs-Einheit (3) gemäß Anspruch 1, wobei die innere Umfangsfläche (39a) des Öl-Fang-Elements (39) einen Winkel (θ) von 120° oder größer, um eine axiale Mitte (21c) der Dreh-Welle (21), hat.

3. Die Leistungs-Einheit (3) gemäß Anspruch 1 oder 2, wobei eine Länge des Öl-AufnahmeRaums (45), entlang der Axial-Richtung der Dreh-Welle (21), größer ist als eine Dicke (S1) der ersten Kupplungs-Platte (26, 87).

4. Die Leistungs-Einheit (3) gemäß irgendeinem der Ansprüche 1 bis 3, wobei der Öl-Aufnahme-Raum (45) eine maximale Tiefe hat, größer als die Dicke (S1) der ersten Kupplungs-Platte (26, 87).

5. Die Leistungs-Einheit (3) gemäß irgendeinem der Ansprüche 1 bis 4, die weiterhin umfasst:
eine Hülse (38), die zwischen dem Lager (34) und dem ersten Kupplungs-Element (25, 85), mit Bezug auf die Axial-Richtung der Dreh-Welle (21), positioniert ist, und durch welche die Dreh-Welle (21) eingesetzt ist; und wobei
zumindest ein Teil des Öl-Fang-Elements (39) radial außerhalb von der Dreh-Welle (21), relativ zu der Hülse (38), positioniert ist.

6. Die Leistungs-Einheit (3) gemäß irgendeinem der Ansprüche 1 bis 5, wobei das Öl-Fang-Element (39) integral mit der Abteilungs-Wand (54) ausgebildet ist.

7. Die Leistungs-Einheit (3) gemäß irgendeinem der Ansprüche 1 bis 6, wobei die Abteilungs-Wand (54) eine erste Wand (54a), die sich in eine Radial-Richtung der Kurbel-Welle (19) erstreckt, und eine zweite Abteilungs-Wand (54b), die sich von einem Abschnitt der vertikalen Wand (54a) zu der Kurbel-Wange (19b), mit Bezug auf eine Axial-Richtung der Kurbel-Welle (19) erstreckt, umfasst.

8. Die Leistungs-Einheit (3) gemäß irgendeinem der Ansprüche 1 bis 7, die weiter umfasst:
ein Öl-Einlass-Element (58), das eine innere Umfangsfläche (58a), positioniert radial außerhalb von der Dreh-Welle (21), relativ zu der äußeren Umfangsfläche (21a) der Dreh-Welle (21), beinhaltet, und, wenn die Leistungs-Einheit (3) an einem Fahrzeug montiert ist, oberhalb des Öl-Fang-Elements (39) positioniert ist, und wobei:
das Öl-Einlass-Element (58) mit Bezug auf die Axial-Richtung der Dreh-Welle (21) an einer Position, näher zu dem ersten Kupplungs-Element (25, 85), relativ zu einem Endabschnitt des Lagers (34), das dem ersten Kupplungs-Element (25, 85) zugewandt ist, positioniert ist, die Position ist ebenso näher zu dem Lager (34), relativ zu einem Endabschnitt des ersten Kupplungs-Elements (25, 85), das dem Lager (34) zugewandt ist, das Öl-Einlass-Element (58) ist beabstandet von dem Lager (34); und
eine Öffnung (59), zum Einführen von Öl in den Öl-Aufnahme-Raum (45), ist zwischen dem Öl-Einlass-Element (58) und dem Öl-Aufnahme-Raum (45) mit Bezug auf die Axial-Richtung der Dreh-Welle (21) ausgebildet.

9. Die Leistungs-Einheit (3) gemäß irgendeinem der Ansprüche 1 bis 8, die weiter umfasst eine Rippe (57, 56), die zwischen dem Lager (34) und dem ersten Kupplungs-Element (25, 85), mit Bezug auf die Axial-Richtung der Dreh-Welle (21), positioniert ist, und nach unten zu dem Öl-Fang-Element (39) geneigt ist.

10. Die Leistungs-Einheit (3) gemäß irgendeinem der Ansprüche 1 bis 9, wobei das Lager (34) eine Dichtungs-Struktur (34) zum Abdichten von Öl beinhaltet.

11. Die Leistungs-Einheit (3) gemäß irgendeinem der Ansprüche 1 bis 10, wobei die äußere Umfangsfläche (21a) der Dreh-Welle (21) und/oder die innere Umfangsfläche (36a) der Bohrung (36) des ersten Kupplungs-Elements (25, 85) mit einer Nut vorgesehen ist/sind.

12. Die Leistungs-Einheit (3) gemäß irgendeinem der Ansprüche 1 bis 11, die weiter umfasst:
ein erstes Zahnrad (23), das an der Kurbel-Welle (19) vorgesehen ist, und wobei:
die Dreh-Welle (21) parallel zu der Kurbel-Welle (19) positioniert ist;
das erste Kupplungs-Element (25, 85) ein zweites Zahnrad (33), in Eingriff mit dem ersten Zahnrad (23), beinhaltet;
das zweite Kupplungs-Element (28, 86) an der Dreh-Welle (21) gesichert ist, und die Leistungs-Einheit (3) umfasst weiterhin:
eine Ausgangswelle (24), die parallel zu der Dreh-Welle (21) positioniert ist; und
ein Getriebe (40), das mit der Dreh-Welle (21) und der Ausgangswelle (24) gekoppelt ist.

13. Die Leistungs-Einheit (3) gemäß irgendeinem der Ansprühe 1 bis 11, die weiter umfasst:
die Dreh-Welle (21) ist koaxial mit der Kurbel-Welle (19) positioniert, und integral mit der Kurbel-Welle (19) ausgebildet; die Leistungs-Einheit (3) umfasst weiterhin:
eine andere Dreh-Welle (80), die parallel zu der Dreh-Welle (21) positioniert ist, und ein erstes Zahnrad (81) beinhaltet, und wobei:
das erste Kupplungs-Element (85) ein zweites Zahnrad (82), in Eingriff mit dem ersten Zahnrad (81), beinhaltet; und
das zweite Kupplungs-Element (86) an der Dreh-Welle (21) gesichert ist.

14. Ein Fahrzeug, das eine Leistungs-Einheit gemäß irgendeinem der Ansprüche 1 bis 13 umfasst.

## Revendications

1. Unité de puissance (3) comprenant :
un cylindre (16),
un piston (17) prévu pour aller et venir dans le cylindre (16) ; un vilebrequin (19) raccordé au piston (17) au travers d'une bielle de liaison (18) ; un arbre tournant (21) incluant une surface circonférentielle externe (21a) et pouvant tourner par l'intermédiaire de la force d'entraînement du vilebrequin (19); un embrayage (30) fixé à l'arbre tournant (21),
un carter moteur (20) accueillant le vilebrequin (19), l'arbre tournant (21) et l'embrayage (30), et
un palier (34) intercalé entre l'arbre tournant (21) et le carter moteur (20) et dans lequel :
l'embrayage (30) comprend un premier élément d'embrayage (25, 85) supporté de sorte à pouvoir tourner par rapport à l'arbre tournant (21), un premier disque d'embrayage (26, 87) tournant avec le premier élément d'embrayage (25, 85), un second disque d'embrayage (27, 88) pouvant faire contact avec le premier disque d'embrayage (26, 87) et se séparer de celui-ci, ainsi qu'un second élément d'embrayage (28, 86) tournant avec le second disque d'embrayage (27, 88) et tournant également avec l'arbre tournant (21),
le premier élément d'embrayage (25, 85) inclut un alésage (36) au travers duquel est inséré l'arbre tournant (21) et qui comporte une surface circonférentielle interne (36a),
dans lequel la surface circonférentielle interne (36a) de l'alésage (36) du premier élément d'embrayage (25, 85) fait face à la surface circonférentielle externe (21a) de l'arbre tournant (21),
l'unité de puissance (3) comprend en outre un élément de récupération d'huile (39) positionné radialement à l'extérieur de l'arbre tournant (21) par rapport à la surface circonférentielle externe (21a) de l'arbre tournant (21) et comporte une surface circonférentielle interne (39a) à distance de la surface circonférentielle externe (21a),
au moins une partie de l'élément de récupération d'huile (39) est disposée, par rapport à la direction axiale de l'arbre tournant (21) à une position plus proche du premier élément d'embrayage (25, 85) par rapport à la partie terminale du palier (34) qui fait face au premier élément d'embrayage (25, 85), la position étant également plus proche du palier (34) par rapport à la partie terminale du premier élément d'embrayage (25, 85) qui fait face au palier (34), et
un espace formant réservoir d'huile (45) est formé entre la surface circonférentielle interne (39a) de l'élément de récupération d'huile (39) et la surface circonférentielle externe (21a) de l'arbre tournant (21), l'espace formant réservoir d'huile (45) stockant de l'huile et communiquant avec un espace formant jeu (37) entre la surface circonférentielle externe (21a) de l'arbre tournant (21) et la surface circonférentielle interne (36a) de l'alésage (36) du premier élément d'embrayage (25, 85),
**caractérisé en ce que**
le vilebrequin (19) inclut un composant principal d'arbre (19A) s'étendant linéairement et un bras de manivelle (19B) s'étendant dans une direction perpendiculaire à la direction axiale,
l'unité de puissance (3) comprend en outre une paroi de séparation prévue dans le carter moteur (20), au moins une partie de la paroi de séparation (54) étant disposée entre le bras de manivelle (19B) et l'embrayage (30) par rapport à la direction axiale du vilebrequin (19), et la paroi de séparation (54) comporte un alésage traversant (55) au travers duquel passe l'arbre tournant (21), et le palier (34) est ajusté dans l'alésage traversant (55) de la paroi de séparation (54), et
un orifice de communication (63) est formé dans une partie de la paroi de séparation (54), l'orifice de communication (63) permettant à un espace (61) défini par la paroi de séparation (54), qui est adjacent au bras de manivelle (19B), et à un espace (62) défini par la paroi de séparation (54), qui est adjacent à l'embrayage (30), de communiquer l'un avec l'autre.

2. Unité de puissance (3) selon la revendication 1, dans lequel la surface circonférentielle interne (39a) de l'élément de récupération d'huile (39) présente un angle (θ) de 120 degrés ou plus autour du centre axial (21c) de l'arbre tournant (21).

3. Unité de puissance (3) selon la revendication 1 ou la revendication 2, dans lequel la longueur de l'espace formant réservoir d'huile (45) le long de la direction axiale de l'arbre tournant (21) est supérieure à l'épaisseur (S1) du premier disque d'embrayage (26, 87).

4. Unité de puissance (3) selon l'une quelconque des revendications 1 à 3, dans lequel l'espace formant réservoir d'huile (45) présente une profondeur maximale supérieure à l'épaisseur (S1) du premier disque d'embrayage (26, 87).

5. Unité de puissance (3) selon l'une quelconque des revendications 1 à 4, comprenant en outre :
un collier (38) disposé entre le palier (34) et le premier élément d'embrayage (25, 85) par rapport à la direction axiale de l'arbre tournant (21), et au travers duquel est inséré l'arbre tournant (21), et dans lequel
au moins une partie de l'élément de récupération d'huile (39) est disposée radialement vers l'extérieur de l'arbre tournant (21) par rapport au collier (38).

6. Unité de puissance (3) selon l'une quelconque des revendications 1 à 5, dans lequel l'élément de récupération d'huile (39) est formé en une seule pièce avec la paroi de séparation (54).

7. Unité de puissance (3) selon l'une quelconque des revendications 1 à 6, dans lequel la paroi de séparation (54) comprend une première paroi (54A) s'étendant dans la direction radiale du vilebrequin (19), ainsi qu'une seconde paroi (54B) s'étendant depuis une partie de la paroi verticale (54A) vers le bras de manivelle (19B) par rapport à la direction axiale du vilebrequin (19).

8. Unité de puissance (3) selon l'une quelconque des revendications 1 à 7, comprenant en outre :
un élément d'introduction d'huile (58) incluant une surface circonférentielle interne (58a) positionnée radialement vers l'extérieur de l'arbre tournant (21) par rapport à la surface circonférentielle externe (21a) de l'arbre tournant (21), et disposée, lorsque l'unité de puissance (3) est montée sur un véhicule, au-dessus de l'élément de récupération d'huile (39), et où
l'élément d'introduction d'huile (58) est disposé, par rapport à la direction axiale de l'arbre tournant (21), à une position plus proche du premier élément d'embrayage (25, 85) par rapport à la partie terminale du palier (34) qui fait face au premier élément d'embrayage (25, 85), la position étant également plus proche du palier (34) par rapport à la partie terminale du premier élément d'embrayage (25, 85) qui fait face au palier (34), l'élément d'introduction d'huile (58) étant espacé du palier (34), et
une ouverture (59), permettant d'introduire de l'huile dans l'espace formant réservoir d'huile (45), est formée entre l'élément d'introduction d'huile (58) et l'espace formant réservoir d'huile (45) par rapport à la direction axiale de l'arbre tournant (21).

9. Unité de puissance (3) selon l'une quelconque des revendications 1 à 8, comprenant en outre une nervure (57, 56) disposée entre le palier (34) et le premier élément d'embrayage (25, 85) par rapport à la direction axiale de l'arbre tournant (21) et inclinée vers le bas en direction de l'élément de récupération d'huile (39).

10. Unité de puissance (3) selon l'une quelconque des revendications 1 à 9, dans lequel le palier (34) inclut une structure d'étanchéité (34) pour assurer l'étanchéité par rapport à l'huile.

11. Unité de puissance (3) selon l'une quelconque des revendications 1 à 10, dans lequel la surface circonférentielle externe (21a) de l'arbre tournant (21) et/ou la surface circonférentielle interne (36a) de l'alésage (36) du premier élément d'embrayage (25, 85) est, ou sont, dotées d'une rainure (67).

12. Unité de puissance (3) selon l'une quelconque des revendications 1 à 11, comprenant en outre :
un premier pignon (23) prévu sur le vilebrequin (19), et dans lequel :
l'arbre tournant (21) est disposé parallèlement au vilebrequin (19),
le premier élément d'embrayage (25, 85) inclut un second pignon (33) s'engrenant avec le premier pignon (23),
le second élément d'embrayage (28, 86) est immobilisé sur l'arbre tournant (21), et
l'unité de puissance (3) comprend en outre :
un arbre de sortie (24) disposé parallèlement à l'arbre tournant (21), et
une transmission (40) couplée à l'arbre tournant (21) et à l'arbre de sortie (24).

13. Unité de puissance (3) selon l'une quelconque des revendications 1 à 11, comprenant en outre :
l'arbre tournant (21), qui est disposé de façon coaxiale avec le vilebrequin (19) et qui est formé en une seule pièce avec le vilebrequin (19), et l'unité de puissance (3) comprend en outre :
un autre arbre tournant (80) disposé parallèlement à l'arbre tournant (21) et incluant un premier pignon (81), et où
le premier élément d'embrayage (85) inclut un second pignon (82) s'engrenant avec le premier pignon (81), et
le second élément d'embrayage (86) est immobilisé sur l'arbre tournant (21).

14. Véhicule comprenant une unité de puissance (3) conforme à l'une quelconque des revendications 1 à 13.
